# EUROPEAN PATENT APPLICATION

(11) **EP 1 124 241 A1**
(43) Date of publication of application: **16.08.2001**
(21) Application number: 99929791.4
(22) Date of filing: 12.07.1999
(51) Int. Cl.: H01H 33/66

(54) **VACUUM SWITCH GEAR**

(30) Priority: 02.10.1998 JP 28066998
(71) Applicant: Hitachi, Ltd., Chiyoda-ku, Tokyo 101-8010 (JP)
(72) Inventor: TANIMIZU, Toru, Kokubu Works, Hitachi, Ltd., Hitachi-shi, Ibaraki 316-0035 (JP); MORITA, Ayumu, Hitachi-shi, Ibaraki 319-1221 (JP); SUZUKI, Minoru, Kokubu Works, Hitachi, Ltd., Hitachi-shi, Ibaraki 316-0035 (JP)
(74) Representative: Strehl Schübel-Hopf & Partner
(86) International application number: JP9903750
(87) International publication number: WO0021105

(57) **Abstract**

An object of the present invention is to provide vacuum switch suitable for a distribution and transformation system compatible between structural simplicity and reliability and a vacuum switchgear using the vacuum switch.

In order to attain the above object, the vacuum switch is formed by containing switching portions into a vacuum container, and comprises a breaker, a grounding switch and an isolator as the switching portions, wherein the vacuum container is separated into at least two chambers, and the switching portion of the breaker is disposed in one of the chambers, and the switching portions of the grounding switch and the isolator are disposed in the other of the chambers.

## Description

### FIELD OF THE INVENTION

The present invention relates to a switchgear, a vacuum switchgear unit and a vacuum switchgear system formed by connecting the switchrear units together in which bus can be easily connect to an integrated container combining a vacuum grounded container or a vacuum container with an gas insulation grounded container.

### BACKGROUND OF THE INVENTION

In order to forming an electric power supply facility effective for coping with increasing demand of power consumption in a congested urban district, the distribution voltage is increased, that is, loads are actively absorbed in a 22 kV system having a large capacity per line from a 6 kV system because there are problems such as difficulty of obtaining a site for a 6 kV distribution substation, lack of installation room for wire ducts, and requirement for a high operability of a 6 kV supply facility. Therefore, it is necessary to make the 22 kV distribution components as compact as 7 to 6 kV components.

As for the distribution and transformation components to be made compact, there is an SF6 gas insulation switchgear disclosed in, for example, Japanese Patent Application Laid-Open No.3-273804. The switchgear is formed by that a breaker, two isolators and a grounding switch individually fabricated are contained in a unit chamber and a bus chamber of power distribution containers filled with an insulation gas. In a case where a vacuum breaker is used as a breaker, making and breaking of a circuit is performed by vertically moving a movable electrode against a fixed electrode using an actuator of the vacuum breaker, or making and breaking of a circuit is performed by vertically or horizontally rotating a movable electrode around an axis as a fulcrum to come into contact with a fixed electrode, as described in Japanese Patent Application Laid-Open No.55-143727.

The distribution and transformation facility having a gas insulation switchgear receives electric power transmitted from, for example, an electric power company using a gas insulation breaker and the like, transforms the electric power to a voltage appropriate for loads, and the electric power is supplied to the loads, for example, a motor or the like. When maintenance and inspection of the distribution and transformation facility are performed, after a gas insulation breaker is switched off, an isolator provided separately from the gas insulation breaker is opened. Then, residual charge and induced current are to let to flow to the ground by grounding a grounding switch and re-application from the power supply is prevented to secure safety of workers. Further, since an accident will occur when the grounding switch is grounded while the bus is charged, an interlock is provided between the breaker and the grounding switch.

For example, in an SF6 gas insulation switchgear is disclosed in Japanese Patent Application Laid-Open No.3-273804, a breaker, two isolators and a grounding switch individually fabricated are contained in a unit chamber and a bus chamber which are formed by filling the insulation gas in the distribution box. In a case where the switchgear is used as a vacuum switchgear, a movable electrode in the vacuum container is vertically moved to a fixed electrode by an actuator to make and break a circuit. In a vacuum switchgear disclosed in Japanese Patent Application Laid-Open No.55-143727, a movable electrode is horizontally rotated around a main axis to come in and off contact with a fixed electrode, that is, make and break a circuit. Further, in a vacuum switchgear disclosed in Japanese Patent Application Laid-Open No.59-75527, rods are extended from the back of a movable electrode and a fixed electrode in a vacuum container to the outside of the vacuum container.

However, in these patents, a connection portion between a power supply side conductor and a power supply bus is not taken into consideration. Further, although Japanese Patent Application Laid-Open No.9-153320 discloses a vacuum switchgear sealed in a gas insulation container, a connection portion between a power supply side conductor and a power supply bus is not taken into consideration.

An object of the present invention is to provide a vacuum switchgear, a vacuum switchgear formed by linking a plurality of vacuum switches, a vacuum switchgear unit and a vacuum switchgear unit which are capable of easily connect a bus or a power supply side bus to a grounded vacuum container or an integrated container. In the present invention, a vacuum container may be grounded, or a vacuum container may be contained in a gas insulation container which is grounded.

### SUMMARY OF THE INVENTION

The present invention provides a switchgear comprising (1) a vacuum switch having a vacuum container, a fixed electrode placed in the vacuum container, a movable electrode connected to and disconnected from the fixed electrode, a load conductor electrically connected to the movable electrode and an outer conductor electrically connected to the fixed electrode; (2) an operating mechanism for driving the movable electrode; and (3) a bus electrically connected to the outer conductor, and a vacuum switchgear unit formed by uniting a plurality of the vacuum switches. Further, a desired vacuum switchgear system can be formed by connecting the vacuum switgears formed in a unit to other units through buses.

In the present invention, the connecting portion for connecting the outer conductor extending from the vacuum container to the bus is a thing surrounding the bus extending toward a horizontal direction to the longitudinal direction of the outer conductor and a connection end of the outer conductor with a surface insulation. The surface insulation method is already known as a connection method applied to a cable head, the present invention employs this surface connection method in order to secure the connection between the vacuum switch and the bus. The surface connection method is a connection method that an elastic body made of rubber or the like is forced to be press-fitted between a rigid solid insulator body made of ceramic or resin and a wall (or a container wall) surrounding a connection portion, and the interface between the solid insulator body and the elastic body is firmly contacted to increase the withstanding voltage. Further, as improvement of the elastic body original in the present invention, a press-fitting operating portion is formed in the connection portion so as to press-fit the elastic body from the outside.

A great advantageous point of the present invention is that the grounded vacuum container and the connection structure can be formed in nearly equal structures. Therefore, a switchgear can be easily assembled so as to construct a desired circuit by preparing plural sets of the vacuum switch, the operating mechanism, the control unit, the connection portion and the bus inavdance. Thereby, the manufacturing cost of the vacuum switchgear, the vacuum switchgear unit and the vacuum switchgear system can be reduced.

In the present invention, a butted end portion of a pair of buses is put on an end portion of overlaid outer conductors, the pair of buses extending in a direction perpendicular to or transverse to the longitudinal direction of the outer conductor, a fastening member such as a bolt being inserted into a through hole provided the overlaid portion, then the fastening member being fastened with a nut or the like to fix the connection pieces. The solid insulator object of the present invention used in the connecting structure of the bus has an inclined surface that a cross-sectional area of the solid insulator object gradually decreased toward a central portion of the connection portion. By press-fitting a screw into the elastic body, the fastening member pulls the elastic body and the solid insulator object nearer to force to closely contact the both with each other. In the connecting structure of the present invention, grounding metallic powder may be mixed in surface portions of the solid insulator object and/or the elastic body so that the surface portions are brought in contact with a conductive cover to be grounded. The insulating method of the bus itself may be performed by solid insulation using epoxy resin, or by gas insulation using an FS₆ gas filled container, or by vacuum insulation using a vacuum container. The present invention can be applied to an integrated vacuum switchgear disclosed in Japanese Patent Application Laid-Open No.9-153320 in which a vacuum container for containing a movable electrode and a fixed electrode is installed inside a gas insulation container.

### BRIEF DESCRIPTION OF DRAWINGS

FIG. 1 is a cross-sectional side view showing an embodiment of a three-phase vacuum switchgear (a switchgear unit) in accordance with the present invention.
FIG. 2 is a circuit diagram explaining movement of the movable contact point of FIG. 1.
FIG. 3 is a cross-sectional view showing the three-phase vacuum switchgear being taken on the plane of the line III of FIG. 1.
FIG. 4 is a detailed cross-sectional view showing the main portion of the connection portion of FIG. 3.
FIG. 5 is a plan view of FIG. 1.
FIG. 6 is a plan view showing another embodiment of a three-phase vacuum switchgear (a switchgear unit) in accordance with the present invention.
FIG. 7 is a schematic plan view showing a vacuum switchgear system which is formed by connecting a plurality of the switchgear units shown in FIG. 1 and FIG. 5.
FIG. 8 is a circuit diagram of the vacuum switchgear unit shown in FIG. 1.

### DESCRIPTION OF THE PREFERRED EMBODIMENTS

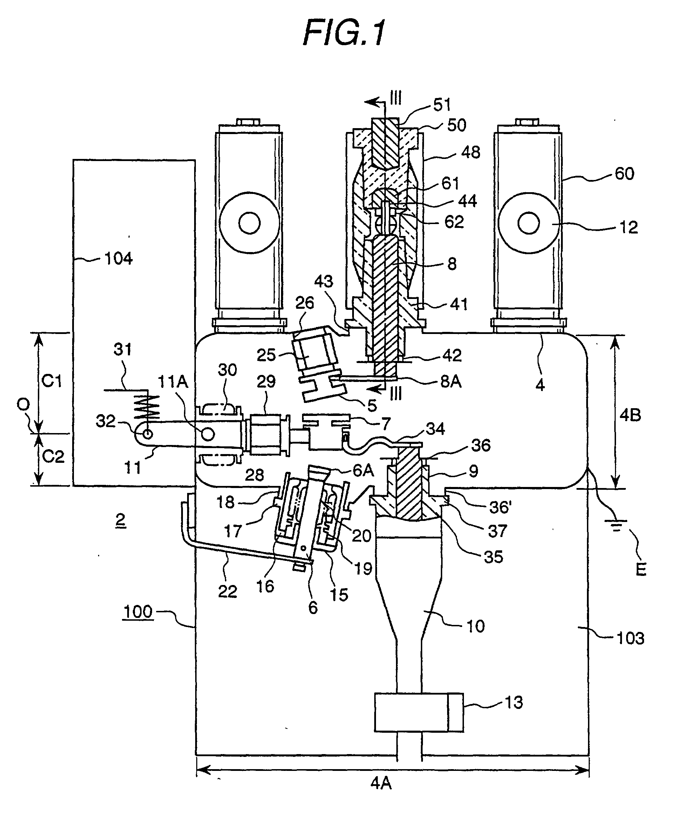

Embodiments of the present invention will be described below, referring to the accompanied drawings. Referring to FIG. 1, A vacuum container 4 is grounded E. A fixed electrode 5 inside the vacuum container is fixed to the vacuum container 4 through an insulator cylinder 25 and a fixed side sealing metallic member 26. The fixed electrode 5 is soldered and connected to an end portion of an outer conductor (an electric power supply side conductor) 8 through a conductor 8A. The outer conductor 8 penetrates through the vacuum container 4 and is fixed by sealing metallic members 42, 43 and an insulating support portion 41. The insulating support portion 41 surrounds the outer conductor 8, and a cross-sectional area of the insulating support portion gradually decreased toward a central portion of the connection portion. In the connection portion, the connection portion is firmly restricted by an elastic body 52 such as a rubber body. The insulating supporting portion 41 and the elastic body 52 are brought in tight contact with a cover 48 (made of stainless steel) and an solid insulator by tightening a screw rod 44 using an adjusting portion 51 having a screw groove. A surface portion of the elastic body 52 and a surface of a lower end portion of the insulating support portion 41 are given electric conductive property, and grounded by through the cover 48.

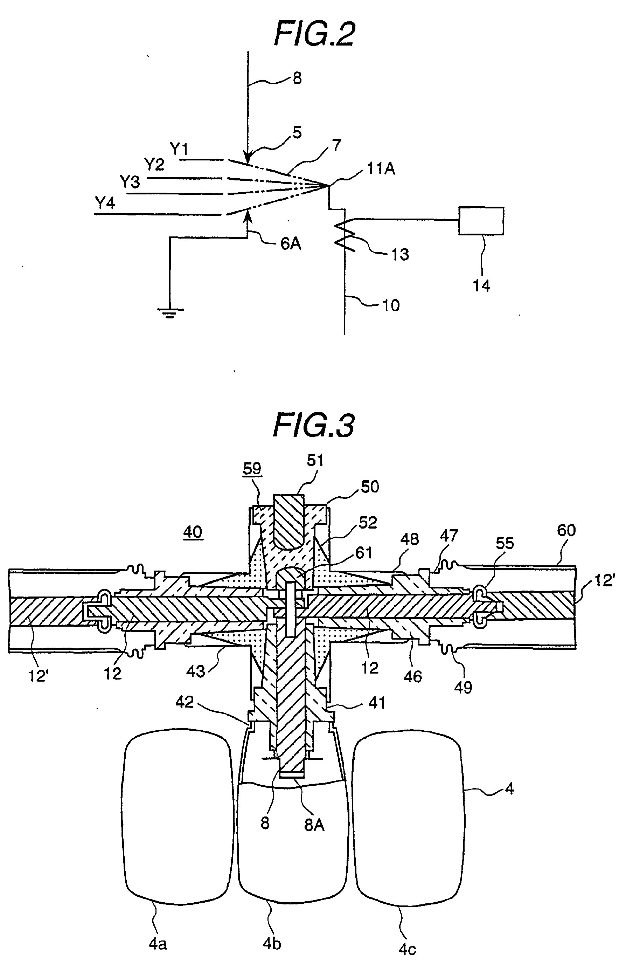

A movable electrode 7 is electrically connected to a load side conductor 9 by a flexible conductor 34 and so on. The movable electrode 7 is connected to a movable blade 11 through a movable side insulation cylinder 29. The movable blade 11 is connected to the vacuum container 4 through a bellows 30, and rotated vertically, in the figure, around an axis 11A. A grounding conductor 6 is fixed to the vacuum container by a bellows 19 inserted into a grounding side bottom metallic member 15 and so on. As shown in FIG. 2, the movable electrode 7 can be switched to four positions, that is, a turning-on position Y1 where it is in contact with the fixed electrode 5, a breaking position Y2 where it is out of contact with the fixed electrode 5 to break current, an isolating position Y3 where it is out of contact with the fixed electrode 5 to keep insulation and a grounding position Y4 where it is in contact with a grounding conductor 6, or the movable electrode 7 can be switched to three positions of Y1, Y2 and Y4. Thereby, the plurality of functions (a breaker, an isolator and a grounding unit, or a breaker and a grounding unit) can be given to the one vacuum switch, and accordingly the vacuum switch can be made small in size.

The present invention can be applied not only to a vacuum switchgear having a plurality of functions as shown in FIG. 1 but also to a vacuum switchgear having a single function. In this case, the movable electrode 7 and the fixed electrode 5 are disposed in one vacuum container, and the grounding unit and the corresponding contact point are disposed in the other vacuum container. The two grounded vacuum container may be separated using an insulation wall.

The movable blade 11 is driven by a driving mechanism 31 connected to an axis 32. The driving mechanism is contained in an operation compartment or an operating machine room 104. The movable blade 11 is moved to cope with a system accident by detecting a current flowing in the load side conductor 9 by a current transformer 13 and operating a protective relay 14 to operate the operating mechanism.

The load side conductor 9 is inserted into a cable head 10. The cable head 10 is inserted into the solid insulator 35 such as a bushing. The cross-sectional structure of the solid insulator is the same as the structure of the solid insulator of the connecting portion described above, and the solid insulator is surrounded and tightly contacted with a soft insulating material such as rubber to form surface insulation. The vacuum switchgear shown in FIG. 1 has a conductor compartment 103. FIG. 8 is a circuit diagram shows a block skeleton of the phase separation type grounded vacuum switchgear clustering the vacuum switchgears of FIG. 1. The vacuum switchgear 100 shown in FIG. 8 has an electric power supply side compartment 102 and conductor compartments 103 in the upper side and in the lower side of the breaker portion compartments 101, respectively. Vacuum buses 12' arranged in the electric power supply side compartment 102 are connected to the phase separation type grounded vacuum switchgears 1, 2, 3 (hereinafter, referred to as vacuum switchgears) for 3 phases inside the grounded vacuum containers 4 of the breaker portion compartments 101, the switchgears are and connected to the load side conductors 9 and the cable heads 10 in the conductor compartments 103. The grounded vacuum containers 4 are grounded, and contain the switchgears 1, 2, 3 for three phases inside.

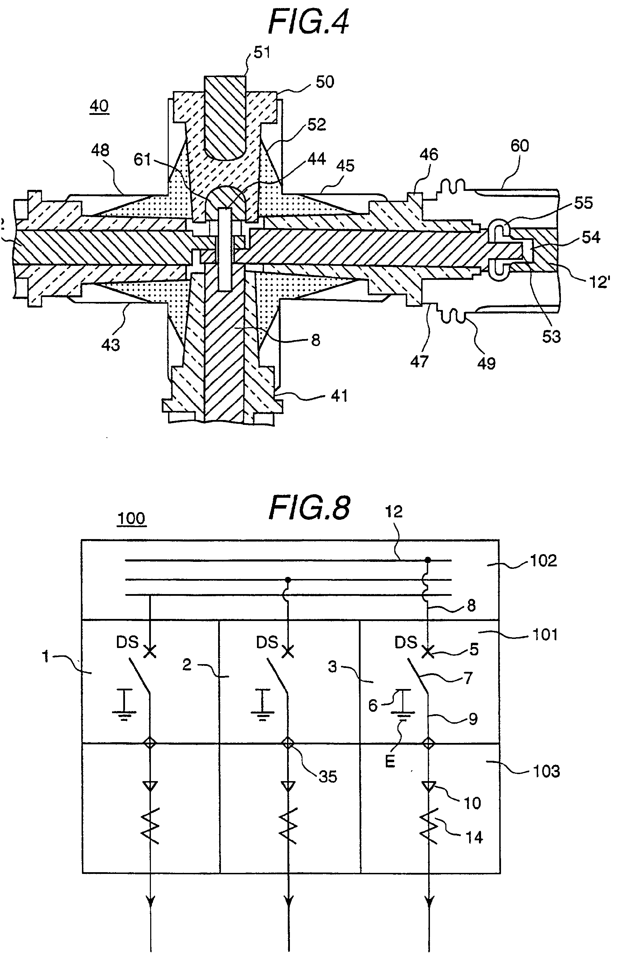

FIG. 3 is a cross-sectional view showing the vacuum switchgear being taken on the plane of the line III of FIG. 1, and FIG. 4 is an enlarged cross-sectional view showing the main portion of FIG. 3. As shown in the figure, the cross-sectional structure of the vacuum container 4 has a vertically-long structure, and the installation area in the lateral direction is suppressed so as to be not increased when the vacuum containers 4 are arranged in parallel. Since the vacuum switches as well as the grounded vacuum containers 4a, 4b, 4c have essentially the same in structure, description on the grounded vacuum containers 4a, 4c will be omitted. The screw rod 44 is inserted in the end portion of the outer portion conductor 8 extending from the grounded vacuum container 4b, and the pair of connection conductors 12 are connected to the screw rod 44. The connection portion is formed in such a shape that one end portion of the connecting conductor 12 is thinned and the other end portion of the connecting conductor 12 is thinned so as to form a projecting portion 53 in the center. An end portion of the bus conductor (vacuum bus) 12' is flexibly connected using a joint portion 55. The bus conductor 12' and the connection conductor 12 are air-tightly covered with an outer cover 48 and a grounded vacuum bus container 60. A part of integrating the bus conductor 12', the connection conductor 12, the outer cover 48, the grounded vacuum bus container 60, the bushing 46, the bellows 49 and the sealing metallic member 47 (a bus assembly) is prepared in advance.

The through holes in the end portions of a pair of the bus assemblies are inserted over the screw rod 44 inserted in the end portion of the outer conductor 8. By rotating a holding member 59, the end of the screw rod 44 is screwed into a screwed hole of a tap 61 of the holding member 59 which is formed by molding the tap 61 and the adjusting portion 51 with screw groove in a unit. By doing so, the screw rod 44 is inserted into the tap 61 through a washer 62, and the insulation protective portion 50 and the elastic body 52 are brought in tight contact with each other. As shown in the figure, the both ends of the bus conductors 12' have an equal shape so as to be connected to the connecting conductors 12. At least two of the vacuum switchgears constructed as described above are combined to form a vacuum switchgear unit.

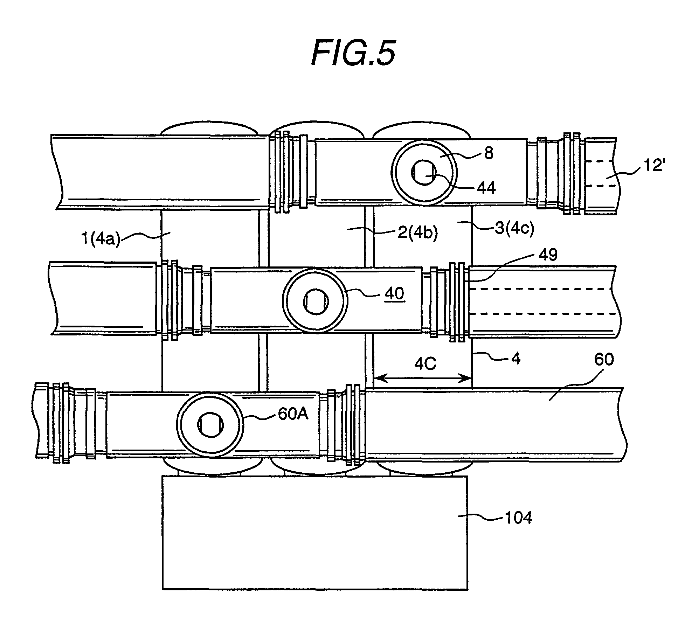

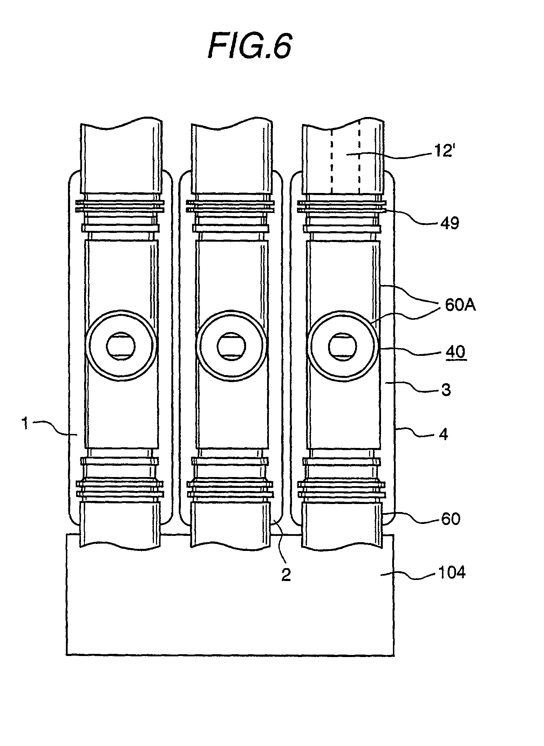

FIG. 5 is a plan view showing the phase separating type grounded vacuum switchgear unit for three phases of FIG. 1 seeing from the top side. The three grounded vacuum containers 4a, 4b and 4c are arranged in parallel. Since the connection portions 40 of the buses are arranged at different positions in the longitudinal direction corresponding to the positions of the grounded vacuum containers 4a, 4b and 4c, the buses 12' can be easily connect to the other vacuum switchgear unit with in-plane connection or two-dimensional connection. On the other hand, in a case of another embodiment shown in FIG. 6, since the connection portions 40 of the buses are arranged at the same positions in the longitudinal direction of the grounded vacuum containers 4a, 4b and 4c, the grounded vacuum containers are arranged through the operating machine chambers 104. As a result, an additional space is required. However, if the operating machine chambers 104 are installed at a space different from the grounded vacuum containers, for example, in a space higher than the grounded vacuum containers, the additional area for installing the operating machine chambers is unnecessary. In this case, if arrangement of the buses extending from the connecting portions are contrived so that the buses are bent in a horizontal direction or a vertical direction, the plurality of vacuum switchgears can be simply arranged in parallel. By doing so, it is possible to provide a vacuum switchgear unit and a vacuum switchgear system which are very small in installation area and in installation volume.

The vacuum switchgear 100 shown in FIG. 1 has the electric power supply side compartment 102 and the conductor compartment 103 in the upper side and in the lower side of the breaker portion compartment 101 containing the grounding vacuum container 4. The vacuum buses 12' arranged in the electric power supply side compartment 102 are connected to the phase separation type grounded vacuum switchgears 1, 2, 3 (hereinafter, referred to as vacuum switchgears) for 3 phases inside the grounded vacuum containers 4 of the breaker portion compartments 101, the switchgears are and connected to the load side conductors 9 and the cable heads 10 in the conductor compartments 103. The grounded vacuum containers 4 are grounded E, and contain the switchgears 1, 2, 3 for three phases inside.

Since the vacuum switchgears 1, 2, 3 have the same in structure, description on the vacuum switchgear 2 will be made, and description on the other switchgears will be omitted. The vacuum switchgear 2 is formed by integrating the breaking function, the isolating function, the grounding function and the bus function. The vacuum switchgear 2 is mainly composed of the fixed electrode 5, the grounding electrode 6A and the movable electrode 7 moving between them. The fixed electrode 5 is connected to the electric power supply side conductor 8 through the connecting conductor 8A formed of a flexible conductor. The movable electrode 7 is connected to the load side conductor 10 through the flexible conductor 34, and the load side conductor 9 is connected to the cable head 10 outside the grounding vacuum container. Further, the movable electrode 7 is mechanically linked to the movable blade 11, and is vertically or horizontally rotated by rotation of the movable blade 11 driven by the driving mechanism portion 31.

The movable electrode stops at the four positions of FIG. 2 as it is moved from the fixed electrode 5 to the grounding electrode 6A. As the movable electrode 7 is rotated, current is conducted at the turning-on position Y1 where the movable electrode 7 is in contact with the fixed electrode 5, and the movable electrode 7 is rotated in the lower side than the turning-on position Y1 and is detached from the fixed electrode 5 at the breaking position Y2 to break the current while an arc is being generated. The movable electrode 7 is rotated in the lower side and is detached from the fixed electrode 5 at the isolating position Y3 to keep an insulation distance apart enough not to produce an electric breakdown by thunder and not to cause an electric shock in a worker in the load conductor side. The movable electrode 7 is further rotated in the lower side and is brought in contact with the grounding electrode 6A at the grounding position Y4. The movable electrode may be moved from the breaking position Y2 to the grounding position Y4 by eliminating the isolating position Y3. Since the four positions can be continuously taken with once of the rotating operation while the movable electrode 7 is rotated from the fixed electrode 7 to the grounding electrode 6A in a vacuum of high insulation, the operation can be easily performed. In addition, since the movable electrode 7, the fixed electrode 5 and the grounding electrode 6A are put together in a position, the vacuum switch can be made. small in size. In the case where the isolating position Y3 is provided in different power supply butting, that is, two-line power receiving having two electric power line systems, when a phase switchgear 2X in one of the line systems is in operation at the turning-on position Y1 and a phase switchgear 2Y in the other of the line systems is on standby at the isolating position Y3, it is safe if a worker touches the load side conductor 9. Further, since working can be continued in a case of switching from standby to operation or from operation to standby, working can be performed fast and operation can be easily performed. Furthermore, it is also possible to cope with an accident in the power line system by detecting conduction current using the current transformer 13, and operating the protective relay 14 to trip the operating mechanism portion (not shown).

The main portion of the grounded vacuum container 4 is made of a conductor such as stainless steel and grounded. Thereby, a worker can work safely when the worker repairs and inspects the switchgear. The grounding vacuum container has a rectangular cross-sectional shape having a longitudinal length 4A longer than a length 4B of the other side (height). As shown in FIG. 3, a length 4C of the width is shorter than the length 4B, and the shape of the transverse cross section is a vertically long ellipsoidal shape. By forming the grounded vacuum container in such a shape, the mechanical strength of the grounded vacuum container 4 is increased and the weight is decreased by thinning the thickness of the grounded vacuum container wall. The vacuum buses 12' for three phases extend in a direction perpendicular to the lateral direction 4A of the vacuum switchgears 1, 2, 3 for three phases. The operating mechanism chamber 104 for driving the movable blade 11 is disposed in the one end side in the width direction 4C of each of the vacuum switchgears 1, 2, 3.

Since the vacuum switchgears 1, 2, 3 have the same in structure, description on the vacuum switchgear 2 for one phase will be made and description on the other switchgears will be omitted. Since the fixed electrode 5 and the grounding electrode 6A, and the load side conductor 9 are arranged in the upper side and the lower side of the one side 4A (in the lateral direction) inside the grounded vacuum container 4, the other side 4B of the grounded vacuum container 4, that is, the dimension in the height direction can be reduced. Further, the distance from the movable electrode 7 to the load side conductor 9 and the cable head 10 can be shortened by the flexible conductor 34. As the result, the vacuum switchgear can be made small in electric resistance, small in heat generation and small in size. The fixed electrode 5 and the grounding electrode 6A are arranged opposite to each other, and the movable electrode 7 is arranged between them, and the movable electrode 7 is rotated between the both electrodes to touch to and detach from the both electrodes.

The grounding conductor having the grounding electrode 6A is supported by the grounded vacuum container 4 by providing a grounding side bottom metallic member 15 and a grounding side bushing 16 made of a ceramic material opening in the other side in the one end, and welding a grounding side seal metallic member 18 attached to a flange 17 formed in the periphery of the grounding side bushing 16 to the grounded vacuum container 4. A grounding side bellows 19 and a spring 20 and the grounding conductor 6 are arranged inside the grounding side bushing 16. The grounding conductor 6 penetrates through the grounding side bottom metallic member 15 to extend the outside, and the end portion of the grounding conductor is connected to a grounding side cable 22 with a screw. The grounding side cable 22 is connected to the outer wall of the vacuum switchgear 100. Further, when the other end portion of the grounding conductor 6 is pushed toward the grounding side bottom metallic member 15, the spring 20 is compressed together with the grounding side bellows 19. At that time, the spring 20 always pushes the grounding conductor 6 toward the movable electrode side by a force caused by the compression.

The fixed electrode 5 disposed at a position opposite to the grounding electrode 6A is supported in the fixing side by an insulating cylinder 25 made of a ceramic material. A fixed side seal metallic member 26 supporting the other end of the insulating cylinder 25 in the fixing side is fixed to the grounding vacuum container 4 with a solder material. A fixing side metallic member 24 and the fixing side seal metallic member 26 are attached to the both ends of the insulating cylinder 25 in the fixing side in advance. Although the outer conductors 8 for three phases are individually disposed at different positions with respect to the grounded vacuum container depending on the phase, the fixed electrodes 5 for three phases can be disposed at an equal position with respect to the grounded vacuum container by connecting the fixed electrode 5 and the outer conductor 8 with the connecting conductor 8A. Since the outer conductor 8 can be disposed at an arbitrary position with respect to the fixed electrode as the reference position, freedom of design can be ensured. Further, the electric power supply side conductor 8 can be disposed at a position where it can be easily assembled. The same can be said on the relationship between the flexible conductor 34 and the load side conductor 9.

The movable electrode 7 arranged between the grounding electrode 6A and the fixed electrode 5 is supported by a movable side insulating cylinder 29 made of a ceramic materal through a movable side metallic member 28. Movable side metallic members 28 are attached to the both ends of the movable side insulating cylinder 29, and the movable blade 11 and a movable side bellows 30 are attached to one of the movable side metallic members 28. The movable blade 11 attached to the grounded vacuum container 4 in the other side of the movable side bellows 30 is surrounded with the movable side bellows 30, and penetrates through the grounded vacuum container 4 and extends to the outside. The movable side bellows 30 allows the movable blade 11 to horizontally and vertically rotate through a main axis 11A provided in the movable blade 11. The movable blade 11 is rotated around the main axis 11A, and bring the movable electrode in contact with the grounding electrode 6A or the fixed electrode to electrically making and breaking a circuit.

The end of the movable blade 11 is driven to be rotated around the main axis 11A by a driving mechanism portion 31 linked to the movable blade. An operating axis 32 links the movable blade 11 to the driving mechanism portion 31. The driving mechanism portion 31 is installed in the operating mechanism chamber described above. A simple structure that the movable electrode is attached in the end of the movable blade may be acceptable. In this case, an insulating means for isolating current, for example, the movable side insulating cylinder 29 is necessary to be placed at a portion in any one of the movable blade or the operating mechanism portion. This structure has an advantage in that design taking thermal deformation into consideration can be moderated, that is, the mechanical rigidity can be reduced compared to the case where current does not flow in the movable blade and the operating mechanism portion. The end portion of the movable electrode 7 and the load side conductor 9 are connected with the flexible conductor 34. The load side conductor 9 is connected to the cable head 10 penetrating through a solid insulator object 35 made of a ceramic material. Load side seal metallic members 36, 36' are formed in an end portion of the solid insulator object 35, and the load side seal metallic object 36 is melt-attached with a solder material to a periphery of an opening formed in the grounded vacuum container 4 to support the load side conductor 9. A grounding metallic layer 37 is formed on a ceramic surface of a load side bushing exposing to the inside of the grounded vacuum container 4 so that leak current flows to the ground E through the grounded vacuum container 4 in order to take safety measure for preventing danger when a worker comes in contact with the cable head 10.

Operation of the vacuum switchgear 2 will be described below, referring to FIG. 2. The movable electrode 7 is in the breaking position Y2 of FIG. 2 disposed between the grounding electrode 6A and the fixed electrode 5 as shown in FIG. 1, and the isolating position Y3 is in the side of the grounding electrode 6A from that position. Since this position serves as an isolator DS, there is no need to provide the isolator and accordingly the switchgear 2 can be made small in size. As the movable electrode 7 is rotated from this position as shown in FIG. 2, the movable electrode 7 comes in contact with the grounding electrode 6A. This is the so-called grounding position Y4. The grounding electrode 6A is always pushed toward the movable electrode direction by the spring 20. The movable electrode 7 is rotated the inverse direction from the grounding position Y4, as shown in FIG. 2. The position Y1 is the turning-on position where the movable electrode 7 is in contact with the fixed electrode 5 and at the same time in contact with the load side conductor 9. In this case, since electric power is supplied to the load side conductor 9 through the flexible conductor 34 from the turning-on position Y1 where the movable electrode 7 is in contact with the fixed electrode 5, the current path can be substantially shortened. As a result, the electric resistance of the current path can be reduced, and accordingly the electric power loss and the heat generation can be reduced by that amount.

Electric power is always supplied to a load when the movable electrode is in the turning-on position Y1, and the operating time is longer than the time using the other positions. Instead of using the flexible conductor 34, another method can be considered is that the movable electrode 7 is in sliding contact directly with the load side conductor 9. In this method, the movable electrode 7 directly slides on the load side conductor 9, and current is continued to flow under a state that the movable electrode 7 is in contact with the load side conductor 9. Therefore, there is possibility that the movable electrode 7 and the load side conductor 9 may be melted and attached together by the generated heat. As a result, a rotating force of the driving mechanism portion 31 has to be increased in order to separate the movable electrode 7 and the load side conductor 9 melt-attached together. Accordingly, the driving mechanism portion 31 becomes large in size, and the vacuum switchgear 2 becomes large in size and high in cost. The wearing rate of the electrodes becomes extremely large when the electrode are slid while the heat is being generated, and accordingly the lifetime of the both electrodes becomes short.

When the movable electrode 7 slides on the load side conductor 9, metallic fine particles generated from the movable electrode 7 and the load side conductor 9 diffuse and remain in the vacuum container to make an electric breakdown easy to be produced. On the other hand, in the present invention, the load side conductor 9 and the movable electrode 7 are connected to each other with the flexible conductor 34, and the movable electrode 7 does not directly slide on the load side conductor 9. Therefore, there is no possibility that the movable electrode 7 and the load side conductor 9 are melted and attached together. As a result, different from the above, a rotating force of the driving mechanism portion 31 is not increased. Accordingly, the driving mechanism portion 31 can be made small in size. Further, the lifetime of the both electrodes become longer than in the above case, and accordingly the vacuum switchgear of the present invention is economically advantageous. Since the load side conductor 9 and the movable electrode 7 are connected to each other in a short distance with the flexible conductor 34, the metallic vapor is not generated from sliding of the movable electrode 7 on the load side conductor 9. It is clear that the current breaking performance can be substantially improved and the grounded vacuum container 4 can be made small in size.

As measures against the metallic vapor, the grounded vacuum container is constructed so that the fixed electrode 5, the grounding electrode 6A and the load side conductor 9, and the movable electrode 7 touching to and detaching from the both electrodes are arranged in one side and in the other side inside the grounded vacuum container, and a volume in the one side of a side of the grounded vacuum container from the movable electrode 7 in the middle of the both electrodes, that is, the upper side volume C1 is larger than a volume C2 in the other side. In such a construction, short circuit current and so on flowing from the fixed electrode to the movable electrode 7 and the load side conductor 9 are broken. The grounding electrode 6A conducts only remaining charge and induced current in the electric power supply side to the ground, and consequently an amount of the metallic vapor generated from the grounding electrode is smaller compared to the fixed electrode side. Therefore, by setting the volume C1 > the volume C2, the metallic vapor easily diffuse in the volume C1 to recover the insulation in a short time.

Since the fixed electrode 5 and the electric power supply side conductor 8 are connected to each other with the connecting conductor 8A, the fixed electrode 5 for each phase can be placed at an equal position in each of the grounded vacuum containers. Therefore, it is possible to arbitrarily determine at what position with respect to the reference position of the fixed electrode 5 the electric power supply side conductor 8 for each phase is connected to the vacuum bus 12' and the connection conductor 12. Since it can be soon understood what position with respect to the reference position of the fixed electrode 5 the electric power supply side conductor 8 should be placed at, there is an advantage in that design and manufacturing can be easily performed. For example, as a result that the fixed electrode 5 disposed at an equal position inside the vacuum container for each of phases is connected to the electric power supply side conductor 8 disposed at a different position depending on each of the phases with the connecting conductor 8A, continuous working can be performed by arranging the vacuum buses 12' connected to the electric power supply side conductors 8 for a plurality of phases at one side 4A of the grounded vacuum containers 4 in a direction perpendicular to the one side of the grounded vacuum container 4, and arranging the connection portions 40 of the electric power supply side conductor 8 and the vacuum bus 12' for each phase in an inclining shape so that the connection portions 40 for each phase do not overlap with one another. In a case where the vacuum buses 12' and the connecting conductors 12 connected to the electric power supply side conductors for a plurality of phases at one side of the grounded vacuum containers extend along the one side on the grounded vacuum container, continuous working can be similarly performed easily by arranging the connection portions for three phases evenly in parallel.

Connection between the electric power supply side conductor 8 and the vacuum bus 12' will be described below, referring to FIG. 3 and FIG. 4. The electric power supply side conductor having one end connected to the connecting conductor 8A penetrates through the insulating support portion 41 in the electric power supply side of a ceramic member, and is connected to the vacuum bus 12' at the connection portion 40. Seal metallic members 42 are provided at the end and at a middle position of the insulating support member 41 in the electric power supply side. One of the seal metallic members 42 is connected to the electric power supply side conductor 8 with solder to maintain a vacuum inside the grounded vacuum container 4.

The pair of connecting conductors 12 of the vacuum buses 12' extending in a direction perpendicular to the end portion of the electric power supply side conductor 8 extending in the vertical direction are supported by the connection portion 40. A screw hole is formed in the end portion of the electric power supply side conductor 8, and the end portions of the pair of connecting conductors 12 each having a through hole corresponding to the screw hole are disposed in overlapping with each other. The pair of vacuum buses 12' can be supported to the end portion of the electric power supply side conductor 8 by inserting a screw rod 44 into these holes and rotating a nut 45 attached to the screw rod 44 to fasten the electric power supply side conductor 8.

The connecting conductors 12 of the pair of vacuum buses 12' extending in the directions opposite to each other are connected by overlapping connecting pieces 12A, 12B and fixing the connecting pieces 12A, 12B by the connecting portion 40. The connecting pieces 12A, 12B are formed by thinning so that a thickness of one end sides of the connecting conductors 12 overlapped with each other is thinner than a not-overlapped thickness of the bus. By doing so, the connecting portions 12A, 12B are prevented to project from the vacuum bus 12', and height or width of the connecting portion 40 and the insulator holding portion 50 can be lowered compared to height or width in the case where the connecting portions 12A, 12B are not formed.

The connecting conductors 12 of the pair of vacuum buses 12' penetrate through the bushing 46 of ceramic member. Seal metallic members 47 are placed at an end and at a middle position of the bushing 46. One of the seal metallic members 47 and a bellows 49 are connected to each other with solder, and the other side of the bellows 49 is connected to the grounded vacuum bus container 60 with welding. A junction portion 55 made of an elastic member is connected with solder between a projecting portion 53 provided in the connecting portion 12 of each of the vacuum buses 12' in the side opposite to the connecting portion 40 and a depressing portion 54 of the other of the vacuum bus 12' corresponding to the projecting portion 53. The junction portion 55 expands and contracts corresponding to increase and decrease of the current load flowing in the vacuum bus 12' and the junction portion 55, and particularly when the projecting portion 53 hits against the depressing portion 54 at expanding, the junction portion prevents abraded metallic powder generated at that time from being discharged the outside, and accordingly prevents occurrence of an accident of short circuit.

The projecting adjusting portion 51 with screw groove and screw rod 44 are attached to the outside end and the inside end of the insulator holding portion 50 by screwing using a spanner or the like. The elastic body 52 such as insulating rubber or the like is fit in the insulating support portion 41 in the electric power supply side and in the outside of the bushings 46 and the insulator holding portion 50 in a closely adhering state. The elastic body 52 is formed in a unit so as to have the four holes of inserting the insulation supporting portion 41 in the electric power supply side, the bushings 46 and the insulator holding portion 50. An insulation rubber cover mixed with grounding metallic powder may be placed on the surface of the elastic body 52 of insulation rubber in order to take measures against electric shock for protecting worker. The insulation cover comprises a first insulation cover portion 52A having a first through hole extending in a one direction and a second insulation cover portion 52B having a second through hole perpendicular to the first through hole, and the both insulation cover portions are communicated. At least the pair of vacuum buses 12' extending in the direction opposite to each other are attached in the through hole of the first insulation cover portion 52A. The vacuum bus 12' is surrounded with the first insulation cover portion, and the outer conductor 8 extending in a direction perpendicular to the vacuum bus 12' described above is attached in the through hole of the second insulation cover portion 52B, and the outer conductor 8 is surrounded with the second insulation cover portion 52B. The connecting pieces 12A, 12B of the overlapped ends of the buses and the connecting portion 40 of the electric power side conductor 8 fixed by the fastening means are disposed at the position intersecting the both through holes at right angle. Therefore, there is an advantage in that the insulation of the electric power side conductor 8, the vacuum buses 12', the connecting portion 40 and so on can be performed simply and in a short time with the insulation cover.

As the adjusting portion 51 with screw groove is rotated, the elastic body 52 such as an insulating rubber is correspondingly pushed by the inclining portion 50A of the insulator holding portion 50 to be expanded and swelled outward, and the elastic body 52 is brought in close contact with the insulator holding portion 50. Since the closely contacting work and the fastening work can be performed only by rotating the adjusting portion 51 with screw groove from the outside, the work is easy to perform. In this state, the atmosphere around each of the vacuum buses 12' is maintained in vacuum.

As described above, each of the vacuum buses 12' is insulated by vacuum, and accordingly the switchgear can be made small in size by the amount that the conductors need not to be covered with any insulation such as resin. Further, the switchgear of the present invention can eliminates the grounding unit and the isolating position, and the grounded vacuum container and the operating mechanism portion can be made small in size. Therefore, it is natural that the circuit switchgear can be made small in size. In addition to the above, the vacuum switchgear in accordance with the present invention can be used as a single product such as a breaker in which a movable electrode touches to and detaches from a fixed electrode, a switch such as a vacuum breaker, an isolator in which a movable electrode touches to and detaches from a fixed electrode, a grounding switch, a switch.

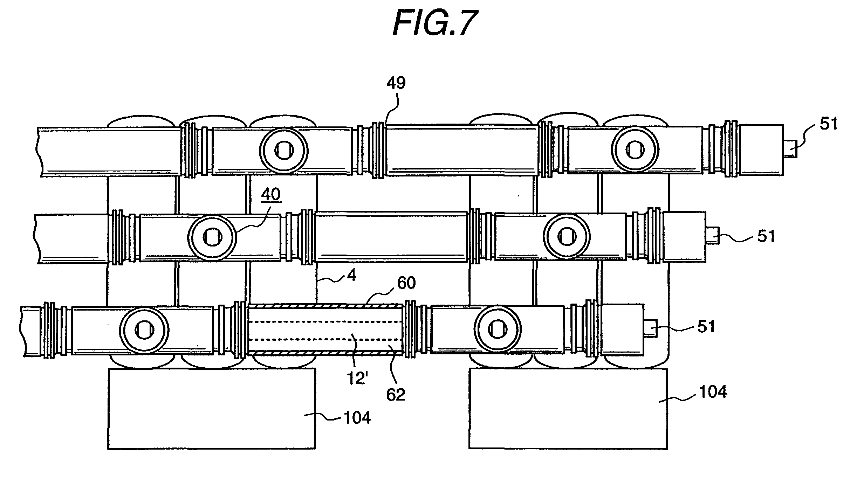

FIG. 7 is a plan view showing a vacuum switchgear system which is formed by connecting a plurality of the switchgear units shown in FIG. 1 and FIG. 5. Referring to the figure, the plurality of the switchgear units are connected through the connecting portions to form a target circuit. Terminal ends of the units are sealed by inserting the connection structural bodies having the adjusting portion 51 with screw groove and the elastic body 52 shown in FIG. 3 and FIG. 4 into the grounded vacuum bus containers 60 covering the buses. Although all the vacuum buses 12' are arranged in straight lines in the figure, the buses may be bent to form an arbitrary circuit structure if necessary. The vacuum bus 12' is disposed under vacuum 62 inside the grounded vacuum bus container 60 made of stainless steel. The vacuum bus 12' is supported by insulators, not shown, at both end portions of the grounded vacuum bus container 60.

According to the present invention described above, there is an effect that the buses or the electric power supply side buses can be easily connected to the grounded vacuum containers or the integrated containers because the vacuum switchgear unit comprises the plurality of vacuum switchgears having the grounded vacuum container or the vacuum container disposed in the grounded gas insulation container; and the pairs of buses connected to the outer conductors of the switchgears, the connecting portion between the buses and the outer portion conductor being insulated by the surface insulation of combining the elastic body and the solid insulators, the closely attaching and fastening work for the surface insulation being performed by rotating the adjusting portion.

## Claims

1. A vacuum switchgear comprising a vacuum container; a fixed electrode placed in said vacuum container and connected to an outer conductor; a movable electrode touching to and detaching from said fixed electrode; an operating mechanism for driving said movable electrode; and a pair of buses connected to said outer conductors, therein a connection portion of said buses and said outer conductor is supported by an end portion of the outer conductor surrounded with a solid insulation object and extending from said vacuum container, and the pair of buses connected to said end portion are supported by a surface insulation.

2. A vacuum switchgear comprising a vacuum switch having a vacuum container, a fixed electrode placed in said vacuum container and connected to an outer conductor, a movable electrode touching to and detaching from said fixed electrode, a grounding conductor, an operating mechanism for driving a load conductor and said movable electrode; and a pair of buses connected to said outer conductors, therein a connection portion between said buses and said outer conductor is supported by an end portion of the outer conductor surrounded with a solid insulation object and extending from said vacuum container, and the pair of buses connected to said end portion are supported by a surface insulation.

3. A vacuum switchgear according to any one of claim 1 and claim 2, wherein said surface connection portion has a structure that an elastic body is brought in tight contact with the solid insulation object by moving a bolt inserted into the end portion of said outer conductor and into the end portions of said pair of buses.

4. A vacuum switchgear according to any one of claim 1 and claim 2, which comprises an inserting portion for inserting a tightening means and an adjusting portion disposed at an insulator holding portion, wherein the insulator holding portion and the inserting portion are moved by rotating the adjusting portion, and the solid insulation object presses the elastic body to be brought in tight contact with the solid insulation object.

5. A vacuum switchgear according to any one of claim 1 and claim 2, wherein the insulator holding portion has such an inclined surface as a cross-sectional area of the insulator holding portion gradually decreased toward a central portion of the connection portion.

6. A vacuum switchgear according to any one of claim 1 and claim 2, wherein surface portions of said solid insulator object and said elastic body contain grounding metallic powder.

7. A vacuum switchgear according to any one of claim 1 and claim 2, wherein said buses and said connection portions are insulated with vacuum.

8. A vacuum switchgear unit formed by combining two or more of the vacuum switchgears according to claim 1.

9. A vacuum switchgear unit, wherein the buses of the vacuum switchgears according to claim 7 are connected to each other.

10. A vacuum switchgear unit comprising a plurality of vacuum switchgears and a plurality of pairs of buses, said vacuum switchgear having a grounded vacuum container or a vacuum container disposed in a grounded gas insulation container, a fixed electrode disposed in said vacuum container and connected to an outer conductor, a movable electrode touching to and detaching from said fixed electrode and an operating mechanism portion for driving said movable electrode; and
said pair of buses connected to said outer conductors, a connection portion of said buses and said outer conductor being supported by an end portion of the outer conductor surrounded with a solid insulation object and extending from said vacuum container, and the pair of buses connected to said end portion are supported by a surface insulation.

11. A vacuum switchgear comprising:
a vacuum switchgear having any one of a grounded vacuum container and a vacuum container disposed in a grounded gas insulation container, a fixed electrode disposed in said vacuum container and connected to an outer conductor, a movable electrode touching to and detaching from said fixed electrode, a grounding conductor and a load conductor electrically connected to said movable electrode;
an operating mechanism portion for driving said movable electrode; and
a pair of buses connected to said outer conductors, wherein a connection portion of said buses and said outer conductor being supported by an end portion of the outer conductor surrounded with a solid insulation object and extending from said vacuum container, and the pair of buses connected to said end portion are supported by a surface insulation.

12. A vacuum switchgear unit comprising a plurality of the vacuum switchgears according to claim 11, said plurality of vacuum switchgears being arranged in a row.

13. A vacuum switgear system comprising a plurality of the vacuum switchgear units according to claim 12, said vacuum switchgear unit being connected to the adjacent vacuum switchgear unit to form a target circuit.
